# EUROPEAN PATENT APPLICATION

(11) **EP 4 741 236 A1**
(43) Date of publication of application: **13.05.2026**
(21) Application number: 24838293.9
(22) Date of filing: 22.02.2024
(51) Int. Cl.: B60S 5/06, B60L 53/80

(54) **BATTERY SWAPPING DEVICE AND BATTERY SWAPPING STATION**

(30) Priority: 07.07.2023 CN 202310830233
(71) Applicant: Contemporary Amperex Technology Co., Limited, Ningde, Fujian 352100 (CN)
(72) Inventor: WU, Kai, Ningde, Fujian 352100 (CN); CHAN, Libing, Ningde, Fujian 352100 (CN)
(74) Representative: Ziebig Hengelhaupt Intellectual Property Attorneys Patentanwaltskanzlei PartGmbB
(86) International application number: PCT/CN2024/078025
(87) International publication number: WO 2025/011031

(57) **Abstract**

A battery swapping device (5), the battery swapping device comprising a bearing platform (51), a driving mechanism (52), a battery swapping platform (53), and an adjusting mechanism (54). The driving mechanism is at least used for driving the bearing platform to ascend and descend. The battery swapping platform is used for mounting and dismounting a battery (11) of an electrical device (6). The adjusting mechanism is connected to the bearing platform and the battery swapping platform and is used for adjusting the spatial posture of the battery swapping platform with respect to the bearing platform. The apparatus reduces difficulty in aligning battery swapping platforms with batteries, improves battery mounting and dismounting efficiency, and reduces the risk of damage to the batteries. **In** addition, also disclosed is a battery swapping station (2).

## Description

### CROSS-REFERENCE TO RELATED APPLICATION

The present application claims priority to Chinese Patent Application No. 202310830233.3, filed on July 7, 2023 and entitled "BATTERY SWAPPING DEVICE AND BATTERY SWAPPING STATION", the content of which is incorporated herein by reference in its entirety.

### TECHNICAL FIELD

The present application relates to the field of battery swapping, and in particular, to a battery swapping device and a battery swapping station.

### BACKGROUND

With the development of new energy technologies, batteries are widely used in electric devices, such as mobile phones, laptop computers, electric bicycles, electric vehicles, electric airplanes, electric ships, electric toy cars, electric toy ships, electric toy airplanes, and electric tools.

Limited by battery capacity, electric devices require frequent charging, which takes time and affects the user experience.

### SUMMARY

The present application provides a battery swapping device and a battery swapping station, which can quickly swap a battery of an electric device.

In a first aspect, the present application provides a battery swapping device. The battery swapping device includes a supporting platform, a driving mechanism, a battery swapping platform, and an adjustment mechanism. The driving mechanism is at least configured to drive the supporting platform to move up and down. The battery swapping platform is configured to disassemble and assemble a battery of an electric device. The adjustment mechanism is connected to the supporting platform and the battery swapping platform, and is configured to adjust a spatial posture of the battery swapping platform relative to the supporting platform.

During detachment of the battery, the adjustment mechanism may adjust the spatial posture of the battery swapping platform based on the spatial posture of the battery, such that the spatial posture of the battery swapping platform is adapted to the spatial posture of the battery to a certain extent, thereby improving the alignment precision of the battery swapping platform and the battery, and reducing the difficulty of detaching the battery. During mounting of the battery, the adjustment mechanism may adjust the spatial posture of the battery swapping platform based on the spatial posture of the battery mounting position of the electric device, such that the spatial posture of the battery on the battery swapping platform is adapted to the spatial posture of the battery mounting position to a certain extent, thereby enabling the battery swapping platform to mount the battery to the electric device more quickly and accurately. In the embodiments of the present application, by providing the adjustment mechanism, the difficulty of the disassembly and assembly of the battery can be reduced, improving the disassembly and assembly efficiency of the battery, and reducing the risk of the battery being crushed.

In some embodiments, a plurality of adjustment mechanisms are provided. The plurality of adjustment mechanisms can increase the adjustment range of the spatial posture of the battery swapping platform and improve the stability of the battery swapping platform during the adjustment process.

In some embodiments, the plurality of adjustment mechanisms are distributed in an array. In the embodiments of the present application, the battery swapping platform may be adjusted at a plurality of sites that are evenly arranged, thereby improving the stability of the battery swapping platform during the adjustment process and improving the adjustment precision.

In some embodiments, the battery swapping platform and the supporting platform are arranged opposite to each other in a first direction, and the first direction is parallel to an up-and-down direction of the supporting platform. The adjustment mechanism is at least configured to change a spacing between the battery swapping platform and the supporting platform in the first direction. The plurality of adjustment mechanisms can change the spacing between the plurality of sites of the battery swapping platform and the supporting platform, thereby adjusting an inclination angle of the battery swapping platform relative to the supporting platform, such that the spatial posture of the battery swapping platform is adapted to the spatial posture of the battery to a certain extent.

In some embodiments, the adjustment mechanism includes a first adjusting member, a second adjusting member, and a first driving member, and the second adjusting member is in contact with the first adjusting member. The first adjusting member is disposed on the battery swapping platform, and the second adjusting member is disposed on the supporting platform. The first driving member is configured to drive the first adjusting member and the second adjusting member to move relative to each other, so as to change the spacing between the battery swapping platform and the supporting platform in the first direction by means of the first adjusting member and the second adjusting member. By adjusting the power output of the first driving member, the adjustment of the spacing between the battery swapping platform and the supporting platform in the first direction can be achieved, which facilitates the automatic control.

In some embodiments, the second adjusting member supports the battery swapping platform by means of the first adjusting member, which can improve the stability of the battery swapping device and simplify the structure.

In some embodiments, the first driving member is connected to the first adjusting member, and is configured to drive the first adjusting member to move relative to the battery swapping platform, a direction of the relative movement between the first adjusting member and the battery swapping platform intersecting with the first direction. The second adjusting member is fixed to the supporting platform. The second adjusting member is configured to guide the first adjusting member to move in the first direction when the first adjusting member moves relative to the battery swapping platform.

The second adjusting member can convert the movement of the first adjusting member relative to the battery swapping platform into the movement of the battery swapping platform in the first direction, thereby making the arrangement manner of the first adjusting member on the battery swapping platform more flexible.

In some embodiments, the first driving member is disposed on a side of the battery swapping platform facing away from the supporting platform; the battery swapping platform is provided with a channel, and the first adjusting member passes through the channel and comes into contact with the second adjusting member. The channel can provide a clearance for the first adjusting member, such that the first adjusting member is connected to the first driving member and is in contact with the second adjusting member.

In some embodiments, the first adjusting member is threadedly connected to the second adjusting member; the first driving member is configured to drive the first adjusting member to rotate relative to the battery swapping platform. The second adjusting member can convert the rotation of the first adjusting member into the movement of the battery swapping platform in the first direction.

In some embodiments, an end of the first adjusting member facing the supporting platform is provided with a first surface, and an end of the second adjusting member facing the battery swapping platform is provided with a second surface, the first surface being configured to be in contact with the second surface. At least one of the first surface and the second surface is an inclined surface, and the inclined surface intersects with a plane perpendicular to the first direction. The inclined surface can convert the relative movement between the battery swapping platform and the first adjusting member into the movement of the battery swapping platform in the first direction.

In some embodiments, the first surface and the second surface are both inclined surfaces, and the first surface and the second surface are in surface-to-surface contact. The surface-to-surface contact can improve the stability of the relative movement between the first adjusting member and the second adjusting member.

In some embodiments, one of the first surface and the second surface is an inclined surface, the other is a circular arc surface, and the first surface and the second surface are in point-to-surface contact. The point-to-surface contact can reduce resistance to the relative movement between the first adjusting member and the second adjusting member.

In some embodiments, the adjustment mechanism includes a second driving member and a link; the second driving member is disposed on the supporting platform, and the link is hinged to the battery swapping platform. The second driving member is configured to drive the link to move in the first direction. The second driving member can push the battery swapping platform to move in the first direction by means of the link, so as to adjust the spatial posture of the battery swapping platform relative to the supporting platform. The link is hinged to the battery swapping platform. When the battery swapping platform is tilted, the hinge point of the link and the battery swapping platform can rotate, thereby reducing the force received and reducing the connection failure between the link and the battery swapping platform.

In some embodiments, the battery swapping device further includes an elastic member, and the elastic member is disposed between the supporting platform and the battery swapping platform and is connected to the supporting platform and the battery swapping platform. The elastic member is configured to apply tension to the supporting platform and the battery swapping platform. The elastic member can provide a reset tension for the supporting platform and the battery swapping platform, such that the battery swapping platform returns to an initial position after the swapping of the battery is completed.

In some embodiments, the battery swapping device further includes a support component, and the support component is fixed to the supporting platform and is hinged to the battery swapping platform. In the process of adjusting the spatial posture of the battery swapping platform by the adjustment mechanism, the support component can provide stable support for the battery swapping platform, which improves the stability of the battery swapping platform during the adjustment process.

In some embodiments, the battery swapping platform and the supporting platform are arranged in a first direction, the first direction being parallel to an up-and-down direction of the supporting platform. The driving mechanism includes a lifting assembly and a first moving platform, and the first moving platform is configured to be movable in a second direction, the second direction being perpendicular to the first direction. The lifting assembly is disposed on the first moving platform, and the lifting assembly is connected to the supporting platform and is configured to drive the supporting platform to move in the first direction.

By providing the lifting assembly and the first moving platform, the movement of the battery swapping platform in the first direction and the second direction can be achieved, such that the battery swapping device can adjust the battery swapping platform based on the position of the battery, thereby achieving the disassembly, assembly, and transfer of the battery, and improving the compatibility of the battery swapping device.

In some embodiments, the driving mechanism further includes a second moving platform. The second moving platform is movably connected to the first moving platform in a third direction, and the lifting assembly is disposed on the second moving platform. Every two of the first direction, the second direction, and the third direction are perpendicular to each other. The driving mechanism can achieve the movement of the battery swapping platform in the three-dimensional space, such that the battery swapping device can adjust the battery swapping platform based on the position of the battery, thereby improving the compatibility of the battery swapping device.

In some embodiments, the driving mechanism further includes a rotating platform, the rotating platform is disposed on the second moving platform, and a rotating shaft of the rotating platform is parallel to the first direction. The lifting assembly is disposed on the rotating platform. The rotating platform can rotate the lifting assembly, and then the battery swapping platform is driven to rotate by means of the lifting assembly, such that an angle of the battery swapping platform is adapted to an angle of the battery, thereby reducing the difficulty of the disassembly and assembly of the battery.

In a second aspect, the embodiments of the present application provide a battery swapping station. The battery swapping station includes a support platform, a battery compartment, and the battery swapping device according to any one of the embodiments of the first aspect. The support platform is configured to support an electric device. The battery compartment is configured to store a battery and charge the battery. The battery swapping device is configured to be movable between the support platform and the battery compartment.

### BRIEF DESCRIPTION OF THE DRAWINGS

Features, advantages, and technical effects of exemplary embodiments of the present application will be described below with reference to the drawings.
FIG. 1 is a schematic structural diagram of a vehicle;
FIG. 2 is an exploded schematic view of a battery in FIG. 1;
FIG. 3 is a schematic diagram of a battery swapping station according to some embodiments of the present application;
FIG. 4 is a schematic structural diagram of a battery swapping device according to some embodiments of the present application;
FIG. 5 is a schematic top view of a battery swapping device according to some embodiments of the present application;
FIG. 6 is a schematic structural diagram of a battery swapping device according to some other embodiments of the present application;
FIG. 7 is a schematic structural diagram of a battery swapping device according to some other embodiments of the present application;
FIG. 8 is a schematic structural diagram of a battery swapping device according to some other embodiments of the present application;
FIG. 9 is a schematic structural diagram of a battery swapping device according to some other embodiments of the present application; and
FIG. 10 is a schematic structural diagram of a battery swapping device according to some other embodiments of the present application.

The drawings are not necessarily drawn to scale.

The reference numerals are as follows:
vehicle 1; battery 11; controller 12; motor 13; case 111; battery cell 112; first case part 111a; second case part 111b;
battery swapping station 2; support platform 3; battery compartment 4; battery swapping device 5; electric device 6; stacker 7;
supporting platform 51;
driving mechanism 52; lifting assembly 521; third driving member 5211; transmission assembly 5212; first moving platform 522; second moving platform 523; rotating platform 524;
battery swapping platform 53; support plate 531; locking/unlocking mechanism 532; channel 533;
adjustment mechanism 54; first adjusting member 541; first surface 541a; second adjusting member 542; second surface 542a; first driving member 543; second driving member 544; link 545;
elastic member 55;
support component 56;
first direction Z; second direction Y; third direction X.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meaning of the above terms in the present application may be interpreted according to specific conditions.

In the present application, the term "and/or" is merely a way to describe the association relationship between associated objects and indicates that there may be three relationships. For example, A and/or B may indicate that: only A is present, both A and B are present, and only B is present. In addition, in the present application, the character "/" generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to no less than two (including two).

In the embodiments of the present application, "parallel" includes not only a case of being absolutely parallel, but also a case of being approximately parallel according to common knowledge in engineering. In addition, "perpendicular" includes not only a case of being absolutely perpendicular, but also a case of being approximately perpendicular according to common knowledge in engineering.

With the development of new energy technologies, more devices use batteries. When electrical energy of an electric device is depleted, the electric device is usually connected to a charging device to replenish the electrical energy. For example, an electric vehicle may be connected to a charging pile for charging. Charging takes a long time and affects the user experience.

Compared with charging, swapping the battery can achieve faster replenishment of electrical energy. The present application provides a battery swapping device. The battery swapping device is capable of detaching a battery with depleted electrical energy from an electric device and mounting a fully charged battery to the electric device, thereby replenishing the electrical energy for the electric device in a short time.

However, the electric device may experience tilting, shifting, or other problems due to various reasons, such as the local deformation of the electric device or the uneven distribution of the load borne by the electric device. This may result in problems such as the tilting or shifting of the battery of the electric device. In the case of the tilting or shifting of the battery, the difficulty of aligning a battery swapping platform of the battery swapping device with the battery increases, which increases the difficulty of the disassembly and assembly of the battery and reduces the disassembly and assembly efficiency of the battery. In particular, when the degree of tilting of the battery is excessively large, problems such as the battery being unable to be detached and the battery being crushed may also be caused.

In view of this, the embodiments of the present application provide a battery swapping device. The battery swapping device is provided with an adjustment mechanism to adjust the spatial posture of the battery swapping platform, such that the spatial posture of the battery swapping platform is adapted to the spatial posture of the battery to a certain extent, thereby reducing the difficulty of aligning the battery swapping platform with the battery, improving the disassembly and assembly efficiency of the battery, and reducing the risk of the battery being crushed.

The battery swapping device and the battery swapping station using the battery swapping device disclosed in the embodiments of the present application may, but are not limited to, be configured for swapping a battery of a vehicle. The vehicle may be a fuel vehicle, a gas vehicle, or a new energy vehicle. The new energy vehicle may be a pure electric vehicle, a hybrid vehicle, an extended-range vehicle, or the like.

The following will be described by taking a vehicle as an example of an electric device.

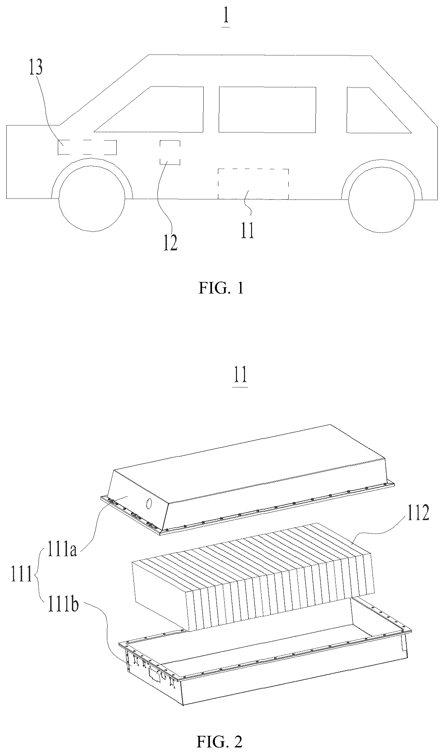

FIG. 1 is a schematic structural diagram of a vehicle. As shown in FIG. 1, a vehicle 1 is provided with a battery 11, and the battery 11 may be disposed at the bottom, the head, or the tail of the vehicle 1. The battery 11 may be configured to power the vehicle 1. For example, the battery 11 may serve as an operation power source for the vehicle 1.

The vehicle 1 may further include a controller 12 and a motor 13. The controller 12 is configured to control the battery 11 to power the motor 13, e.g., for the operation power needed by the vehicle 1 for start-up, navigation, and driving.

In some embodiments of the present application, the battery 11 may not only serve as the operation power source for the vehicle 1, but also as a driving power source for the vehicle 1 to, replacing or partially replacing fuel or natural gas, provide driving power for the vehicle 1.

In some embodiments, the battery 11 may be snap-fitted to the chassis of the vehicle 1 by means of a snap-fit structure.

FIG. 2 is an exploded schematic view of a battery in FIG. 1. As shown in FIG. 2, the battery 11 may refer to a single physical module including one or a plurality of battery cells 111 to provide higher voltage and capacity.

In some embodiments, the battery 11 may be a battery pack.

As an example, the battery 11 includes a case 111 and battery cells 112. The battery cells 112 are accommodated in the case 111.

The case 111 may be a component that accommodates the battery cells 112. The case 111 provides an accommodating space for the battery cells 112, and the case 111 may be of various structures.

In some embodiments, the case 111 may include a first case part 111a and a second case part 111b. The first case part 111a and the second case part 111b are mutually lidded with each other. The first case part 111a and the second case part 111b jointly define an accommodating space for accommodating the battery cells 112. The second case part 111b may be of a hollow structure with one end open, the first case part 111a is of a plate-like structure, and the open side of the second case part 111b is lidded with the first case part 111a to form the case 111 having the accommodating space. The first case part 111a and the second case part 111b may each be of a hollow structure with one side open, and the open side of the second case part 111b is lidded with the open side of the first case part 111a to form the case 111 having the accommodating space. Certainly, the first case part 111a and the second case part 111b may be in various shapes, such as a cylinder or a rectangular parallelepiped.

To improve the sealing performance after the first case part 111a and the second case part 111b are connected, a sealing member, such as a sealant or a seal ring, may be further provided between the first case part 111a and the second case part 111b.

If the top part of the second case part 111b is lidded with the first case part 111a, the first case part 111a may also be referred to as an upper case cover, and the second case part 111b may also be referred to as a lower case body 111.

In the battery 11, one or a plurality of battery cells 112 may be provided. If a plurality of battery cells 112 are provided, the plurality of battery cells 112 may be connected in series, in parallel, or in series-parallel. The series-parallel connection means that both series connection and parallel connection are present in the connection of the plurality of battery cells 112.

The plurality of battery cells 112 may be directly connected in series, in parallel, or in series-parallel, and then the whole formed by the plurality of battery cells 112 is accommodated in the case 111. Certainly, the situation may be that the plurality of battery cells 112 are first connected in series, in parallel, or in series-parallel to form battery modules, and then the plurality of battery modules are connected in series, in parallel, or in series-parallel to form a whole and accommodated in the case 111.

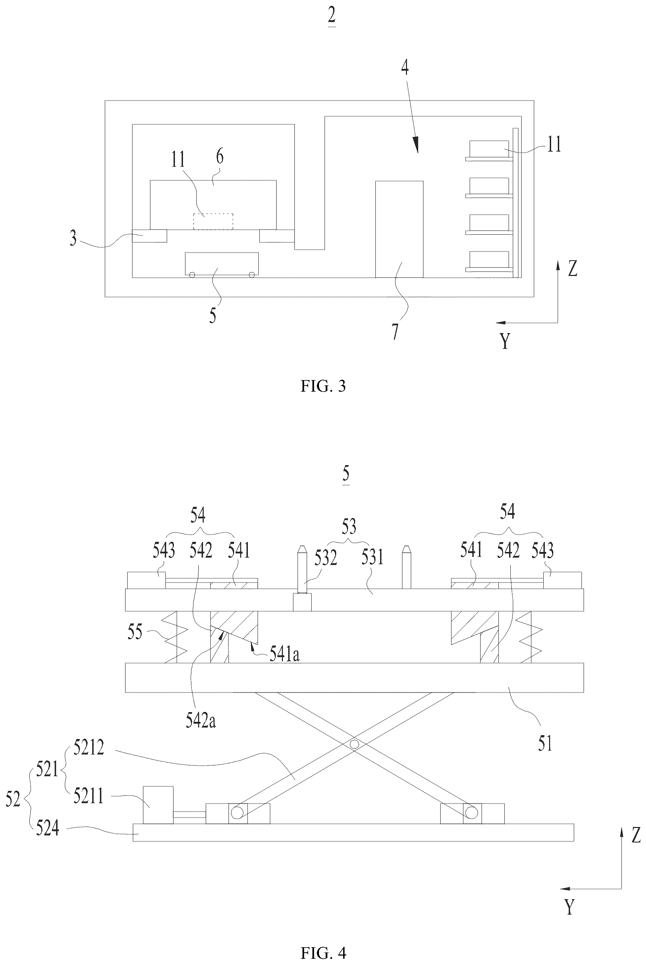

FIG. 3 is a schematic diagram of a battery swapping station according to some embodiments of the present application.

In some embodiments, a battery swapping station 2 includes a support platform 3, a battery compartment 4, and a battery swapping device 5. The support platform 3 is configured to support an electric device 6. The battery compartment 4 is configured to store a battery 11 and charge the battery 11. The battery swapping device 5 is configured to be movable between the support platform 3 and the battery compartment 4. The battery swapping device 5 may be configured to swap the battery 11 of the electric device 6.

Illustratively, the battery swapping station 2 according to the embodiments of the present application can swap the battery 11 according to the following steps: I) after the electric device 6 enters the support platform 3, the battery swapping device 5 can move to the lower side of the electric device 6, and detach the battery with depleted electrical energy from the electric device 6; II) the battery swapping device 5 transfers the detached battery to be charged to the battery compartment 4 for charging, and receives a fully charged battery stored in the battery compartment 4; III) the battery swapping device 5, carrying the fully charged battery, moves to the lower side of the electric device 6 and mounts the fully charged battery onto the electric device 6; and IV) the electric device 6 leaves the support platform 3.

In some embodiments, a stacker 7 is provided within the battery compartment 4. The stacker 7 is configured to transfer the battery to be charged, which is detached by the battery swapping device 5, to a charging position of the battery compartment 4 for charging, and place a fully charged battery stored in the battery compartment 4 on the battery swapping device 5.

In some embodiments, the support platform 3 includes an elevating mechanism, and the elevating mechanism is configured to elevate the electric device 6, such that the battery swapping device 5 moves to the lower side of the electric device 6.

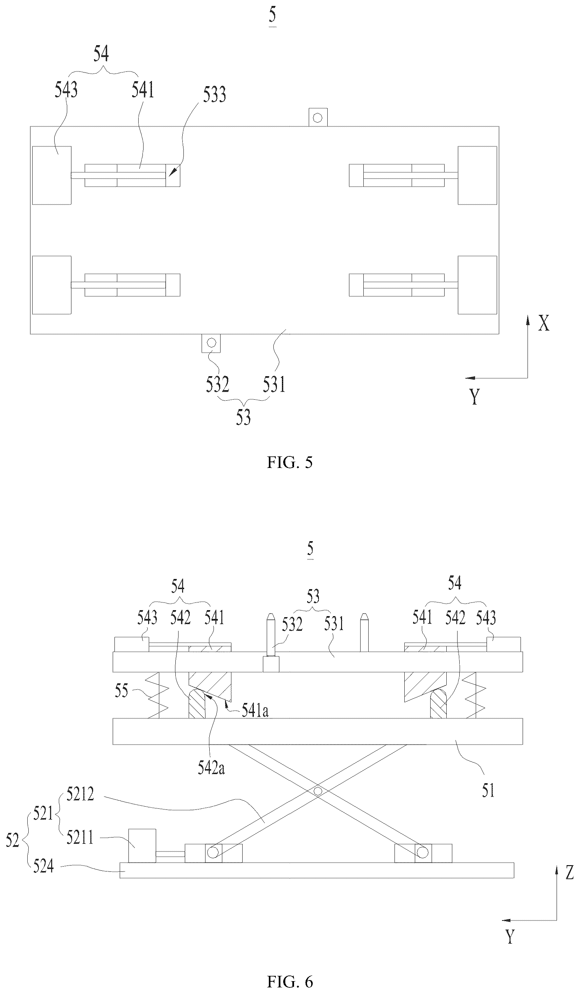

FIG. 4 is a schematic structural diagram of a battery swapping device according to some embodiments of the present application; and FIG. 5 is a schematic top view of a battery swapping device according to some embodiments of the present application.

Referring to FIGs. 4 to 5, the battery swapping device 5 according to the embodiments of the present application includes a supporting platform 51, a driving mechanism 52, a battery swapping platform 53, and an adjustment mechanism 54. The driving mechanism 52 is at least configured to drive the supporting platform 51 to move up and down. The battery swapping platform 53 is configured to disassemble and assemble the battery 11 of the electric device 6. The adjustment mechanism 54 is connected to the supporting platform 51 and the battery swapping platform 53, and is configured to adjust the spatial posture of the battery swapping platform 53 relative to the supporting platform 51.

The supporting platform 51 is configured to support the battery swapping platform 53. Illustratively, during detachment of the battery 11, the battery swapping platform 53 may be located on a side of the supporting platform 51 facing the battery 11.

The driving mechanism 52 may only drive the supporting platform 51 to move up and down. Alternatively, in addition to driving the supporting platform 51 to move up and down, the driving mechanism 52 may further drive the supporting platform 51 to perform a horizontal motion and/or a rotational motion.

The battery swapping platform 53 may release the locking between the battery 11 and the electric device 6 to detach the battery 11 from the electric device 6; the battery swapping platform 53 may also lock the battery 11 to the electric device 6 to mount the battery 11 to the electric device 6.

The adjustment of the spatial posture of the battery swapping platform 53 relative to the supporting platform 51 by the adjustment mechanism 54 includes, but is not limited to, at least one of rotation, tilting, and up-and-down movement of the battery swapping platform 53 relative to the supporting platform 51.

One or a plurality of adjustment mechanisms 54 may be provided. In some examples, a plurality of adjustment mechanisms 54 are provided, and the arrangement manner of the plurality of adjustment mechanisms 54 may be flexibly set according to requirements.

As an example, when the battery to be charged of the electric device 6 needs to be detached, the battery swapping device 5 is moved to the lower side of the electric device 6; the driving mechanism 52 elevates the battery swapping platform 53, such that the battery swapping platform 53 moves toward the battery to be charged, abuts against the battery to be charged, and supports the battery to be charged. If the spatial posture of the battery 11 greatly deviates from a set state due to the impact of factors such as the mounting precision of the battery 11 and the positional deviation of the electric device 6, the adjustment mechanism 54 may adjust the spatial posture of the battery swapping platform 53 based on the spatial posture of the battery 11, such that the spatial posture of the battery swapping platform 53 is adapted to the spatial posture of the battery 11 to a certain extent. Then, the battery swapping platform 53 releases the locking between the battery 11 and the electric device 6. After the battery swapping platform 53 releases the locking between the battery 11 and the electric device 6, the driving mechanism 52 drives the battery to be charged to move downward and disengages the battery to be charged from the electric device 6, thereby detaching the battery to be charged from the electric device 6.

The battery swapping device 5 may transfer the detached battery to be charged to the battery compartment 4 for charging, and receive a fully charged battery stored in the battery compartment 4.

When the battery swapping device 5 needs to mount the fully charged battery to the electric device 6, the battery swapping device 5 is moved to the lower side of the electric device 6; the driving mechanism 52 elevates the battery swapping platform 53, such that the battery swapping platform 53 is elevated with the fully charged battery and approaches the electric device 6. If a tilt or other condition occurs at the battery mounting position of the electric device 6 for mounting the battery 11, the adjustment mechanism 54 may correspondingly adjust the spatial posture of the battery swapping platform 53, such that the spatial posture of the battery 11 on the battery swapping platform 53 is adapted to the spatial posture of the battery mounting position to a certain extent, thereby enabling the battery swapping platform 53 to mount the battery 11 to the electric device 6 more quickly and accurately.

During detachment of the battery 11, the adjustment mechanism 54 may adjust the spatial posture of the battery swapping platform 53 based on the spatial posture of the battery 11, such that the spatial posture of the battery swapping platform 53 is adapted to the spatial posture of the battery 11 to a certain extent, thereby improving the alignment precision of the battery swapping platform 53 and the battery 11, and reducing the difficulty of detaching the battery 11. During mounting of the battery 11, the adjustment mechanism 54 may adjust the spatial posture of the battery swapping platform 53 based on the spatial posture of the battery mounting position of the electric device 6, such that the spatial posture of the battery 11 on the battery swapping platform 53 is adapted to the spatial posture of the battery mounting position to a certain extent, thereby enabling the battery swapping platform 53 to mount the battery 11 to the electric device 6 more quickly and accurately. In the embodiments of the present application, by providing the adjustment mechanism 54, the difficulty of the disassembly and assembly of the battery 11 can be reduced, improving the disassembly and assembly efficiency of the battery 11, and reducing the risk of the battery 11 being crushed.

In some embodiments, a plurality of adjustment mechanisms 54 are provided.

In some examples, the plurality of adjustment mechanisms 54 may adjust the spatial posture of the battery swapping platform 53 relative to the supporting platform 51 in the same manner. For example, each adjustment mechanism 54 is configured to change the spacing between the battery swapping platform 53 and the supporting platform 51 in a first direction Z, and the first direction Z may be parallel to the up-and-down direction of the supporting platform 51.

In some other examples, the plurality of adjustment mechanisms 54 may also adjust the spatial posture of the battery swapping platform 53 relative to the supporting platform 51 in different manners. For example, some of the adjustment mechanisms 54 are configured to change the spacing between the battery swapping platform 53 and the supporting platform 51 in the first direction Z, and others of the adjustment mechanisms 54 are configured to rotate the battery swapping platform 53.

The arrangement manner of the plurality of adjustment mechanisms 54 may vary according to different design requirements. Illustratively, the arrangement manner of the plurality of adjustment mechanisms 54 may be based on the shape of the battery 11, a possible posture deviation of the battery 11, or other settings. For example, the plurality of adjustment mechanisms 54 may be evenly distributed, such as distributed in an array; alternatively, the plurality of adjustment mechanisms 54 may be unevenly distributed.

The plurality of adjustment mechanisms 54 can increase the adjustment range of the spatial posture of the battery swapping platform 53, and improve the stability of the battery swapping platform 53 during the adjustment process.

In some embodiments, the plurality of adjustment mechanisms 54 are distributed in an array.

Illustratively, the plurality of adjustment mechanisms 54 may be distributed in a rectangular array or in an annular array.

In the embodiments of the present application, the battery swapping platform 53 may be adjusted at a plurality of sites that are evenly arranged, thereby improving the stability of the battery swapping platform 53 during the adjustment process and improving the adjustment precision.

In some embodiments, the battery swapping platform 53 is substantially rectangular when viewed from the first direction Z, and the plurality of adjustment mechanisms 54 are distributed in a rectangular array. In some other embodiments, the battery swapping platform 53 is substantially circular when viewed from the first direction Z, and the plurality of adjustment mechanisms 54 are distributed in an annular array.

In some embodiments, the battery swapping platform 53 is rectangular. When viewed from the first direction Z, the outer contour of the battery swapping platform 53 is substantially rectangular. Optionally, the supporting platform 51 is connected to four corners of the battery swapping platform 53 by means of four adjustment mechanisms 54, respectively.

In some embodiments, the battery swapping platform 53 includes a support plate 531 and a locking/unlocking mechanism 532. The support plate 531 is configured to support the battery 11. The locking/unlocking mechanism 532 is disposed on the support plate 531, and the locking/unlocking mechanism 532 is configured to release the locking between the battery 11 and the electric device 6 or lock the battery 11 to the electric device 6.

When the battery to be charged of the electric device 6 needs to be detached, the driving mechanism 52 drives the support plate 531 to move upward, such that the support plate 531 abuts against the battery to be charged and supports the battery to be charged. After the support plate 531 supports the battery to be charged, the locking/unlocking mechanism 532 moves and releases the locking between the battery to be charged and the electric device 6.

If the spatial posture of the battery 11 greatly deviates, the adjustment mechanism 54 can adjust the spatial posture of the locking/unlocking mechanism 532 by means of the support plate 531, so as to improve the alignment precision of the locking/unlocking mechanism 532.

When the fully charged battery needs to be mounted to the electric device 6, the driving mechanism 52 drives the support plate 531 to move upward, such that the fully charged battery on the support plate 531 moves toward the electric device 6. When the fully charged battery reaches a set position, the locking/unlocking mechanism 532 moves and locks the fully charged battery to the electric device 6.

If the spatial posture of the battery mounting position of the electric device 6 greatly deviates, the adjustment mechanism 54 can adjust the spatial posture of the battery 11 and the spatial posture of the locking/unlocking mechanism 532 by means of the support plate 531, such that the battery 11 is aligned with the battery mounting position, and the alignment precision of the locking/unlocking mechanism 532 is improved.

According to different connection relationships between the battery 11 and the electric device 6, the locking/unlocking mechanism 532 may be correspondingly configured in different structures.

In some examples, the battery 11 is snap-fitted to the electric device 6 by means of a snap-fit structure. In this case, the locking/unlocking mechanism 532 includes a liftable unlocking post. When the battery to be charged needs to be detached, the unlocking post rises and presses the snap-fit structure to release the locking between the battery to be charged and the electric device 6.

In some other examples, the electric device 6 and the battery 11 are connected by means of a bolt or other threaded fasteners. In this case, the locking/unlocking mechanism 532 includes a bolt sleeve, and the bolt sleeve can drive the bolt to rotate, so as to release the locking between the battery to be charged and the electric device 6.

In other examples, the locking/unlocking mechanism 532 may also adopt other mechanisms.

Optionally, the support plate 531 is rectangular. The four adjustment mechanisms 54 are connected to four corners of the support plate 531, respectively.

In some embodiments, the battery swapping platform 53 includes a plurality of locking/unlocking mechanisms 532.

In some embodiments, the adjustment mechanism 54 is connected to the supporting platform 51 and the support plate 531. Illustratively, the adjustment mechanism 54 is disposed between the supporting platform 51 and the support plate 531.

In some embodiments, the battery swapping platform 53 and the supporting platform 51 are arranged opposite to each other in the first direction Z, and the first direction Z is parallel to the up-and-down direction of the supporting platform 51. Optionally, the battery swapping platform 53 is located above the supporting platform 51.

In some embodiments, the adjustment mechanism 54 is at least configured to change the spacing between the battery swapping platform 53 and the supporting platform 51 in the first direction Z.

The plurality of adjustment mechanisms 54 can change the spacing between the plurality of sites of the battery swapping platform 53 and the supporting platform 51, thereby adjusting an inclination angle of the battery swapping platform 53 relative to the supporting platform 51, such that the spatial posture of the battery swapping platform 53 is adapted to the spatial posture of the battery 11 to a certain extent.

In the embodiments of the present application, the movement range of the battery swapping platform 53 in the first direction Z by the adjustment mechanism 54 is smaller than the movement range of the battery swapping platform 53 in the first direction Z by the driving mechanism 52.

In some embodiments, the adjustment mechanism 54 includes a first adjusting member 541, a second adjusting member 542, and a first driving member 543. The second adjusting member 542 is in contact with the first adjusting member 541. The first adjusting member 541 is disposed on the battery swapping platform 53, and the second adjusting member 542 is disposed on the supporting platform 51. The first driving member 543 is configured to drive the first adjusting member 541 and the second adjusting member 542 to move relative to each other, so as to change the spacing between the battery swapping platform 53 and the supporting platform 51 in the first direction Z by means of the first adjusting member 541 and the second adjusting member 542.

The first driving member 543 may drive the first adjusting member 541, may drive the second adjusting member 542, or may also simultaneously drive the first adjusting member 541 and the second adjusting member 542.

The first adjusting member 541 and the second adjusting member 542 may be in point contact, line contact, or surface contact.

The relative movement between the first adjusting member 541 and the second adjusting member 542 includes at least one of a linear motion and a rotational motion.

By adjusting the power output of the first driving member 543, the adjustment of the spacing between the battery swapping platform 53 and the supporting platform 51 in the first direction Z can be achieved, which facilitates the automatic control.

In some embodiments, the second adjusting member 542 supports the battery swapping platform 53 by means of the first adjusting member 541, which can improve the stability of the battery swapping device 5 and simplify the structure.

In some embodiments, the first driving member 543 is connected to the first adjusting member 541, and is configured to drive the first adjusting member 541 to move relative to the battery swapping platform 53. Illustratively, the first driving member 543 may drive the first adjusting member 541 to perform a linear motion, or may also drive the first adjusting member 541 to perform a rotational motion.

In some embodiments, the direction of the relative movement between the first adjusting member 541 and the battery swapping platform 53 intersects with the first direction Z. Illustratively, the first driving member 543 may drive the first adjusting member 541 to perform a linear motion.

In some embodiments, the second adjusting member 542 is fixed to the supporting platform 51. The second adjusting member 542 may be fixed to the supporting platform 51 by means of fastener-based connection, snap-fit connection, bonding, welding, or other connection manners. Optionally, the second adjusting member 542 is fixed to the upper side of the supporting platform 51.

In some embodiments, the second adjusting member 542 is configured to guide the first adjusting member 541 to move in the first direction Z when the first adjusting member 541 moves relative to the battery swapping platform 53.

By providing the second adjusting member 542, the movement of the first adjusting member 541 relative to the battery swapping platform 53 can be converted into the movement of the battery swapping platform 53 in the first direction Z, thereby making the arrangement manner of the first adjusting member 541 on the battery swapping platform 53 more flexible.

In some embodiments, the first driving member 543 is disposed on a side of the battery swapping platform 53 facing away from the supporting platform 51, thereby saving the space between the battery swapping platform 53 and the supporting platform 51, and improving the integration level of the battery swapping device 5.

In some embodiments, the battery swapping platform 53 is provided with a channel 533, and the first adjusting member 541 passes through the channel 533 and comes into contact with the second adjusting member 542.

By providing the channel 533, clearance can be provided for the first adjusting member 541, such that the first adjusting member 541 is connected to the first driving member 543 and is in contact with the second adjusting member 542.

In some embodiments, the channel 533 extends along a second direction Y, and the channel 533 can guide the first adjusting member 541 to translate in the second direction Y. The second direction Y is perpendicular to the first direction Z. In some other examples, the channel 533 extends along a third direction X, and the channel 533 can guide the second adjusting member 542 to move in the third direction X. Every two of the first direction Z, the second direction Y, and the third direction X are perpendicular to each other.

In some embodiments, at least part of the first adjusting member 541 is located on a side of the battery swapping platform 53 facing the supporting platform 51, and overlaps with the battery swapping platform 53 in the first direction Z. The first adjusting member 541 can support the battery swapping platform 53.

In some embodiments, an end of the first adjusting member 541 facing the supporting platform 51 is provided with a first surface 541a, and an end of the second adjusting member 542 facing the battery swapping platform 53 is provided with a second surface 542a. The first surface 541a is configured to be in contact with the second surface 542a. At least one of the first surface 541a and the second surface 542a is an inclined surface, and the inclined surface intersects with a plane perpendicular to the first direction Z.

By providing the inclined surface, the relative movement between the battery swapping platform 53 and the first adjusting member 541 can be converted into the movement of the battery swapping platform 53 in the first direction Z.

In some embodiments, the first surface 541a and the second surface 542a are both inclined surfaces, and the first surface 541a and the second surface 542a are in surface-to-surface contact. The surface-to-surface contact can improve the stability of the relative movement between the first adjusting member 541 and the second adjusting member 542.

In some embodiments, the battery swapping device further includes an elastic member 55, and the elastic member 55 is disposed between the supporting platform 51 and the battery swapping platform 53 and is connected to the supporting platform 51 and the battery swapping platform 53. The elastic member 55 is configured to apply tension to the supporting platform 51 and the battery swapping platform 53.

The elastic member 55 may be a component that works by using elastic characteristics. Illustratively, the elastic member 55 may be of an elastic structure. For example, the elastic member 55 may include a spring. Illustratively, the elastic member 55 may be a component made of an elastic material, such as a rubber band made of elastic rubber.

One or a plurality of elastic members 55 may be provided.

The elastic member 55 can provide a reset tension for the supporting platform 51 and the battery swapping platform 53, such that the battery swapping platform 53 returns to the initial position after the swapping of the battery 11 is completed.

In addition, by providing the elastic member 55, the risk of separation between the first adjusting member 541 and the second adjusting member 542 can be further reduced.

In some embodiments, the elastic member 55 includes a spring.

In some embodiments, four elastic members 55 are provided, and four support plates 531 are provided. The four elastic members 55 are connected to four corners of the support plate 531.

FIG. 6 is a schematic structural diagram of a battery swapping device according to some other embodiments of the present application.

As shown in FIG. 6, in some embodiments, one of the first surface 541a and the second surface 542a is an inclined surface, the other is a circular arc surface, and the first surface 541a and the second surface 542a are in point-to-surface contact.

Illustratively, the circular arc surface is a part of a spherical surface.

In some examples, the first surface 541a is an inclined surface, and the second surface 542a is a circular arc surface. In another example, the second surface 542a is an inclined surface, and the first surface 541a is a circular arc surface.

The point-to-surface contact can reduce resistance to the relative movement between the first adjusting member 541 and the second adjusting member 542.

In some embodiments, the first surface 541a is an inclined surface, and the second surface 542a is a circular arc surface.

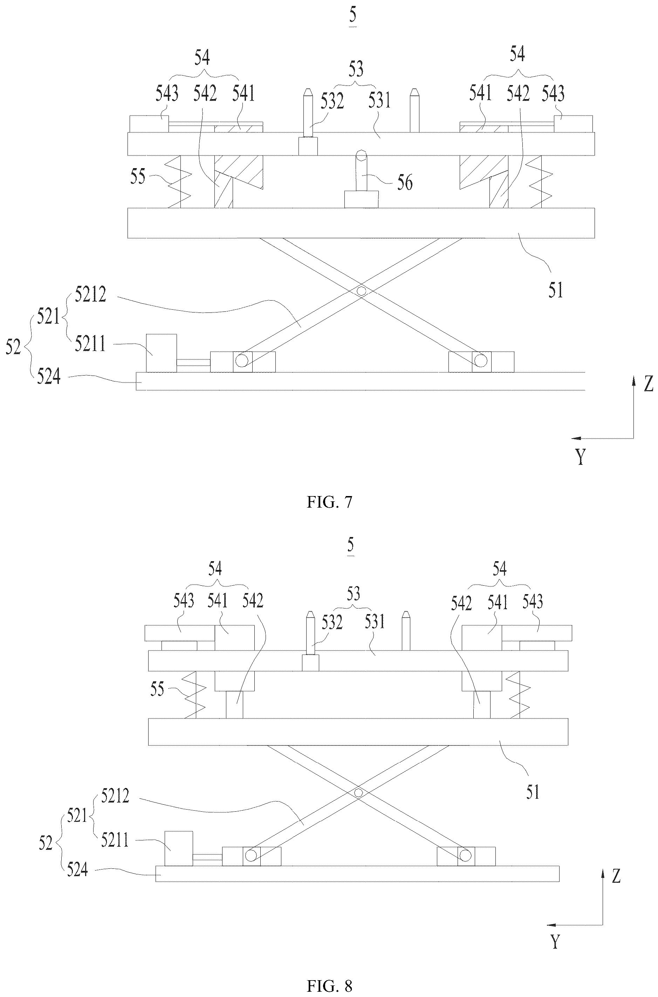

FIG. 7 is a schematic structural diagram of a battery swapping device according to some other embodiments of the present application.

As shown in the figure, in some embodiments, the battery swapping device 5 further includes a support component 56, and the support component 56 is fixed to the supporting platform 51 and is hinged to the battery swapping platform 53.

In the process of adjusting the spatial posture of the battery swapping platform 53 by the adjustment mechanism 54, the support component 56 can provide stable support for the battery swapping platform 53, which improves the stability of the battery swapping platform 53 during the adjustment process.

Illustratively, the site where the battery swapping platform 53 is hinged to the support component 56 may serve as a base point for fixation. The site where the battery swapping platform 53 is connected to the adjustment mechanism 54 may move up and down relative to the base point, or may also rotate around the base point.

In some embodiments, the hinge point of the support component 56 and the battery swapping platform 53 is of a spherical hinge structure.

FIG. 8 is a schematic structural diagram of a battery swapping device according to some other embodiments of the present application.

As shown in FIG. 8, in some embodiments, the first adjusting member 541 may be threadedly connected to the second adjusting member 542. The first driving member 543 may be configured to drive the first adjusting member 541 to rotate relative to the battery swapping platform 53.

The second adjusting member 542 can convert the rotation of the first adjusting member 541 into the movement of the battery swapping platform 53 in the first direction Z.

In some embodiments, the second adjusting member 542 includes a screw rod, and the first adjusting member 541 includes a sleeve. The sleeve is provided with an internal thread, and the screw rod extends into the sleeve and is threadedly connected to the sleeve.

In some embodiments, the first adjusting member 541 is mounted to the battery swapping platform 53 by means of a bearing.

In some embodiments, the outer periphery of the sleeve is provided with a gear, and the first driving member 543 is meshed with the gear to drive the sleeve to rotate.

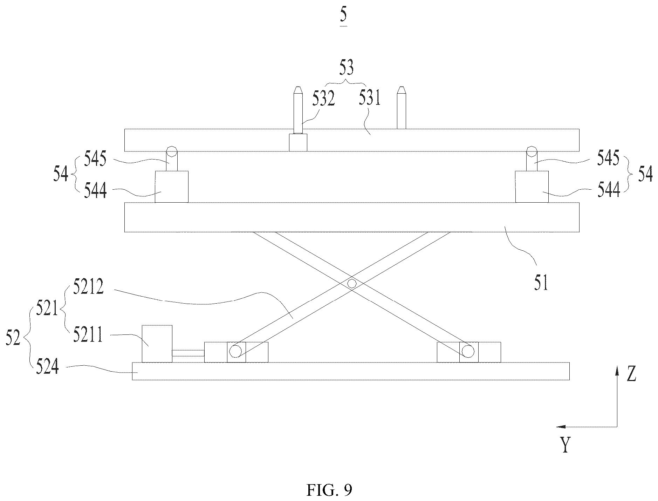

FIG. 9 is a schematic structural diagram of a battery swapping device according to some other embodiments of the present application.

As shown in FIG. 9, in some embodiments, the adjustment mechanism 54 includes a second driving member 544 and a link 545. The second driving member 544 is disposed on the supporting platform 51, and the link 545 is hinged to the battery swapping platform 53. The second driving member 544 is configured to drive the link 545 to move in the first direction Z.

The second driving member 544 can push the battery swapping platform 53 to move in the first direction Z by means of the link 545, so as to adjust the spatial posture of the battery swapping platform 53 relative to the supporting platform 51. The link 545 is hinged to the battery swapping platform 53. When the battery swapping platform 53 is tilted, the hinge point of the link 545 and the battery swapping platform 53 can rotate, thereby reducing the force received and reducing the connection failure between the link 545 and the battery swapping platform 53.

In some embodiments, the hinge point of the link 545 and the battery swapping platform 53 is of a spherical hinge structure.

In some embodiments, the second driving member 544 includes a cylinder or an electric motor.

In some embodiments, the second driving member 544 and the link 545 are both located between the supporting platform 51 and the support plate 531, and the link 545 is hinged to the support plate 531.

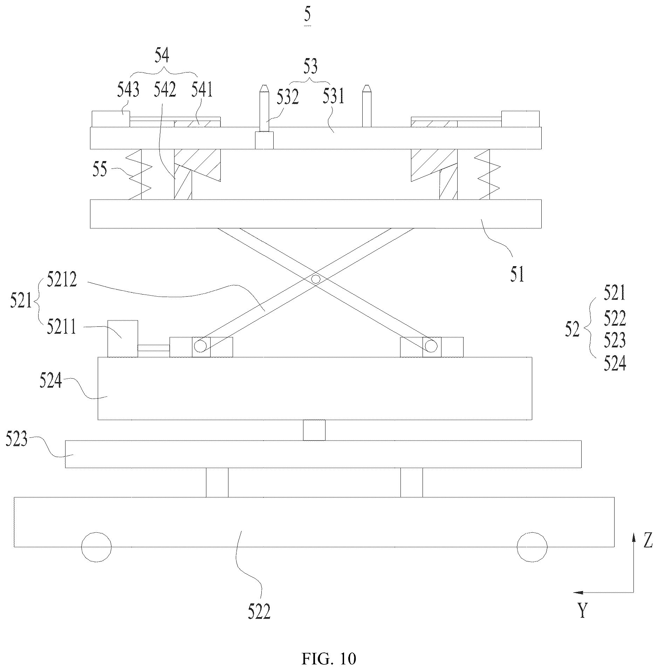

FIG. 10 is a schematic structural diagram of a battery swapping device according to some other embodiments of the present application.

As shown in FIG. 10, the battery swapping platform 53 and the supporting platform 51 are arranged in the first direction Z, and the first direction Z is parallel to the up-and-down direction of the supporting platform 51. The driving mechanism 52 includes a lifting assembly 521 and a first moving platform 522. The first moving platform 522 is configured to be movable in the second direction Y, and the first direction Z is perpendicular to the second direction Y. The lifting assembly 521 is disposed on the first moving platform 522, and the lifting assembly 521 is connected to the supporting platform 51 and is configured to drive the supporting platform 51 to move in the first direction Z.

The lifting assembly 521 may be directly connected to the first moving platform 522, or may be indirectly connected to the first moving platform 522 by means of other structures.

The first moving platform 522 can drive the lifting assembly 521 to move in the second direction Y.

In the embodiments of the present application, by providing the lifting assembly 521 and the first moving platform 522, the movement of the battery swapping platform 53 in the first direction Z and the second direction Y can be achieved, such that the battery swapping device 5 can adjust the battery swapping platform 53 based on the position of the battery 11, thereby achieving the disassembly, assembly, and transfer of the battery 11, and improving the compatibility of the battery swapping device 5.

In some embodiments, the support platform 3 and the battery compartment 4 may be arranged in the second direction Y. The first moving platform 522 can drive the battery swapping platform 53 to move in the second direction Y by means of the lifting assembly 521, such that the battery swapping platform 53 transfers the battery to be charged to the battery compartment 4, or the battery swapping platform 53 transfers the fully charged battery from the battery compartment 4 to the lower side of the electric device 6.

In some embodiments, the second direction Y may be parallel to a horizontal plane.

In some embodiments, the lifting assembly 521 includes a third driving member 5211 and a transmission assembly 5212. The third driving member 5211 is connected to the transmission assembly 5212, and the transmission assembly 5212 is connected to the supporting platform 51.

The third driving member 5211 is configured to provide power to drive, by means of the transmission assembly 5212, the supporting platform 51 to move in the first direction Z. As an example, the third driving member 5211 includes, but is not limited to, at least one of an electric motor, a cylinder, and a hydraulic cylinder.

The transmission assembly 5212 is configured to transmit the power provided by the third driving member 5211 to the supporting platform 51. As an example, the transmission assembly 5212 includes, but is not limited to, at least one of a scissor-type transmission structure, a linkage transmission structure, a cam transmission structure, and a screw-and-nut transmission structure.

In some embodiments, the first moving platform 522 may be disposed on a first guide rail extending in the second direction Y, and the transmission between the first moving platform 522 and the first guide rail may be achieved by means of a rack, a belt, a chain, or other structures, such that the first moving platform 522 can move in the second direction Y.

In some embodiments, the first guide rail is configured to guide the movement of the battery swapping device 5, such that the battery swapping device 5 can move between the support platform 3 and the battery compartment 4. Illustratively, one end of the first guide rail extends into the battery compartment 4, and the other end extends to the lower side of the support platform 3.

In some embodiments, the driving mechanism 52 further includes a second moving platform 523. The second moving platform 523 is movably connected to the first moving platform 522 in the third direction X, and the lifting assembly 521 is disposed on the second moving platform 523. Every two of the first direction Z, the second direction Y, and the third direction X are perpendicular to each other.

The first moving platform 522 can drive mechanisms, such as the second moving platform 523, the lifting assembly 521, the supporting platform 51, the adjustment mechanism 54, and the battery swapping platform 53, to move in the second direction Y. The second moving platform 523 can drive mechanisms, such as the lifting assembly 521, the supporting platform 51, the adjustment mechanism 54, and the battery swapping platform 53, to move in the third direction X.

In the embodiments of the present application, the driving mechanism 52 can achieve the movement of the battery swapping platform 53 in the three-dimensional space, such that the battery swapping device 5 can adjust the battery swapping platform 53 based on the position of the battery 11, thereby improving the compatibility of the battery swapping device 5.

In some embodiments, the second moving platform 523 is provided with a rack extending in the third direction X. The first moving platform 522 is provided with a gear and an electric motor, and the gear is meshed with the rack. The electric motor drives the gear to rotate, and the gear drives the rack to move in the third direction X.

In some embodiments, the driving mechanism 52 further includes a rotating platform 524, the rotating platform 524 is disposed on the second moving platform 523, and a rotating shaft of the rotating platform 524 is parallel to the first direction Z. The lifting assembly 521 is disposed on the rotating platform 524.

The rotating platform 524 can rotate the lifting assembly 521, and then the battery swapping platform 53 is driven to rotate by means of the lifting assembly 521, such that the angle of the battery swapping platform 53 is adapted to the angle of the battery 11, thereby reducing the difficulty of the disassembly and assembly of the battery 11.

The embodiments of the present application further provide a battery swapping station 2. The battery swapping station includes a support platform, a battery compartment, and the battery swapping device according to any one of the foregoing embodiments. The support platform is configured to support an electric device. The battery compartment is configured to store a battery and charge the battery. The battery swapping device is configured to be movable between the support platform and the battery compartment.

Referring to FIGs. 4 and 5, the embodiments of the present application provide a battery swapping device 5. The battery swapping device includes a supporting platform 51, a driving mechanism 52, a battery swapping platform 53, four adjustment mechanisms 54, and a battery swapping platform 53.

The driving mechanism 52 includes a first moving platform 522, a second moving platform 523, a rotating platform 524, and a lifting assembly 521. The lifting assembly 521 is connected to the supporting platform 51 and is configured to drive the supporting platform 51 to move in a first direction Z, the first moving platform 522 is configured to be movable in a second direction Y, and the second moving platform 523 is movably connected to the first moving platform 522 in a third direction X. Every two of the first direction Z, the second direction Y, and the third direction X are perpendicular to each other. The rotating platform 524 is disposed on the second moving platform 523, a rotating shaft of the rotating platform 524 is parallel to the first direction Z, and the lifting assembly 521 is disposed on the rotating platform 524.

The battery swapping platform 53 is located on a side of the supporting platform 51 facing away from the lifting assembly 521 in the first direction Z, and the battery swapping platform 53 is configured to disassemble and assemble the battery 11 of the electric device 6.

Each adjustment mechanism 54 includes a first adjusting member 541, a second adjusting member 542, and a first driving member 543. The first driving member 543 is disposed on the battery swapping platform 53 and is connected to the first adjusting member 541, the second adjusting member 542 is fixed to the supporting platform 51, and the first adjusting member 541 is fitted with the second adjusting member 542 by means of inclined surfaces. The first driving member 543 is configured to drive the first adjusting member 541 to move, so as to change the spacing between the battery swapping platform 53 and the supporting platform 51 in the first direction Z by means of the first adjusting member 541 and the second adjusting member 542.

Although the present application has been described with reference to preferred embodiments, various modifications may be made and components herein may be replaced with equivalents without departing from the scope of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A battery swapping device, comprising:
a supporting platform;
a driving mechanism, at least configured to drive the supporting platform to move up and down;
a battery swapping platform, configured to disassemble and assemble a battery of an electric device; and
an adjustment mechanism, connected to the supporting platform and the battery swapping platform and configured to adjust a spatial posture of the battery swapping platform relative to the supporting platform.

2. The battery swapping device according to claim 1, wherein a plurality of the adjustment mechanisms are provided.

3. The battery swapping device according to claim 2, wherein the plurality of adjustment mechanisms are distributed in an array.

4. The battery swapping device according to claim 2 or 3, wherein the battery swapping platform and the supporting platform are arranged opposite to each other in a first direction, the first direction being parallel to an up-and-down direction of the supporting platform; and
the adjustment mechanism is at least configured to change a spacing between the battery swapping platform and the supporting platform in the first direction.

5. The battery swapping device according to claim 4, wherein the adjustment mechanism comprises a first adjusting member, a second adjusting member, and a first driving member, the second adjusting member being in contact with the first adjusting member; and
the first adjusting member is disposed on the battery swapping platform, and the second adjusting member is disposed on the supporting platform; the first driving member is configured to drive the first adjusting member and the second adjusting member to move relative to each other, so as to change the spacing between the battery swapping platform and the supporting platform in the first direction by means of the first adjusting member and the second adjusting member.

6. The battery swapping device according to claim 5, wherein the second adjusting member supports the battery swapping platform by means of the first adjusting member.

7. The battery swapping device according to claim 5 or 6, wherein the first driving member is connected to the first adjusting member, and is configured to drive the first adjusting member to move relative to the battery swapping platform, a direction of the relative movement between the first adjusting member and the battery swapping platform intersecting with the first direction;
the second adjusting member is fixed to the supporting platform; and
the second adjusting member is configured to guide the first adjusting member to move in the first direction when the first adjusting member moves relative to the battery swapping platform.

8. The battery swapping device according to claim 7, wherein the first driving member is disposed on a side of the battery swapping platform facing away from the supporting platform; the battery swapping platform is provided with a channel, and the first adjusting member passes through the channel and comes into contact with the second adjusting member.

9. The battery swapping device according to claim 7 or 8, wherein the first adjusting member is threadedly connected to the second adjusting member; the first driving member is configured to drive the first adjusting member to rotate relative to the battery swapping platform.

10. The battery swapping device according to any one of claims 5 to 8, wherein an end of the first adjusting member facing the supporting platform is provided with a first surface, and an end of the second adjusting member facing the battery swapping platform is provided with a second surface, the first surface being configured to be in contact with the second surface; and
at least one of the first surface and the second surface is an inclined surface, and the inclined surface intersects with a plane perpendicular to the first direction.

11. The battery swapping device according to claim 10, wherein the first surface and the second surface are both inclined surfaces, and the first surface and the second surface are in surface-to-surface contact; or
one of the first surface and the second surface is an inclined surface, the other is a circular arc surface, and the first surface and the second surface are in point-to-surface contact.

12. The battery swapping device according to claim 4, wherein the adjustment mechanism comprises a second driving member and a link, the second driving member is disposed on the supporting platform, and the link is hinged to the battery swapping platform; and
the second driving member is configured to drive the link to move in the first direction.

13. The battery swapping device according to any one of claims 4 to 12, further comprising an elastic member, wherein the elastic member is disposed between the supporting platform and the battery swapping platform and is connected to the supporting platform and the battery swapping platform; and
the elastic member is configured to apply tension to the supporting platform and the battery swapping platform.

14. The battery swapping device according to any one of claims 1 to 13, further comprising a support component, wherein the support component is fixed to the supporting platform and is hinged to the battery swapping platform.

15. The battery swapping device according to any one of claims 1 to 14, wherein the battery swapping platform and the supporting platform are arranged in a first direction, the first direction being parallel to an up-and-down direction of the supporting platform; and
the driving mechanism comprises a lifting assembly and a first moving platform, and the first moving platform is configured to be movable in a second direction, the second direction being perpendicular to the first direction; the lifting assembly is disposed on the first moving platform, and the lifting assembly is connected to the supporting platform and is configured to drive the supporting platform to move in the first direction.

16. The battery swapping device according to claim 15, wherein the driving mechanism further comprises a second moving platform, the second moving platform is movably connected to the first moving platform in a third direction, the lifting assembly is disposed on the second moving platform, and every two of the first direction, the second direction, and the third direction are perpendicular to each other.

17. The battery swapping device according to claim 16, wherein the driving mechanism further comprises a rotating platform, the rotating platform is disposed on the second moving platform, and a rotating shaft of the rotating platform is parallel to the first direction; and
the lifting assembly is disposed on the rotating platform.

18. A battery swapping station, comprising:
a support platform, configured to support an electric device;
a battery compartment, configured to store a battery and charge the battery; and
the battery swapping device according to any one of claims 1 to 17, wherein the battery swapping device is configured to be movable between the support platform and the battery compartment.
